# EUROPEAN PATENT APPLICATION

(11) **EP 1 919 129 A1**
(43) Date of publication of application: **07.05.2008**
(21) Application number: 07021225.3
(22) Date of filing: 30.10.2007
(51) Int. Cl.: H04L 12/24, H04L 29/08

(54) **Method and system for synchronizing network management topology data**

(30) Priority: 31.10.2006 CN 200610137643; 30.08.2007 WO PCT/CN2007/070589
(71) Applicant: Huawei Technologies Co., Ltd., Longgang District, Shenzhen Guangdong 518129 (CN)
(72) Inventor: Liu, Hiuyang, Shenzhen 518129 Gunagdong (CN)
(74) Representative: Manitz, Finsterwald & Partner GbR

(57) **Abstract**

A method for synchronizing network management topology data, applied to a client, includes: sending a first data identifier, ID, and a first status identifier associated with a first data on a client to a server (303); receiving a second data on the server from the server (305), where a second data ID associated with the second data is identical with the first data ID, and a second status identifier associated with the second data is different from the first status identifier (304); and updating the first data according to the second data (306). A method applied to a server, a client and a server are disclosed as well. By the solution, only changed data is transmitted during data synchronization; therefore, data interactions are greatly reduced; time consumption is reduced; probability of service loss is lowered.

## Description

### Field of the Invention

The present invention relates to network management technologies, and particularly to a method and system for synchronizing network management topology data.

### Background of the invention

A network management system is a software system providing centralized management of various telecommunication devices. A topology module provided by the network management system is an important man-machine interface. A user can perform an operation upon topology object, such as a device, connection, sub-map, and can interact with a background server via the topology module. To accelerate the response speed of telecommunication devices and network maintenance, the method of buffering a portion of data on a client is used in data distribution by the topology module. Therefore, the network interaction delay caused by data change from operations is reduced.

Along with the development and expansion of telecommunication services, the amount of devices managed by the network management system becomes larger and larger. Data amount of the device in the network management system also becomes larger and larger. Operations, such as configuration, maintenance, monitoring and service dispatching of telecommunication devices, may change attribute of data of the telecommunication device. User operations from the client may also change the attribute of a portion of data. The attribute includes a device name, coordinate position, icon pattern, text description and various statuses such as normal, offline and malfunction.

The synchronization function provided by the topology module is a major function for synchronizing topology data. The synchronization function makes it convenient and immediate to solve the problem of inconsistent of data between a server and a client. In environment with larger data amount, how to synchronize data fast and accurately becomes a problem faced by the topology module in the network management system.

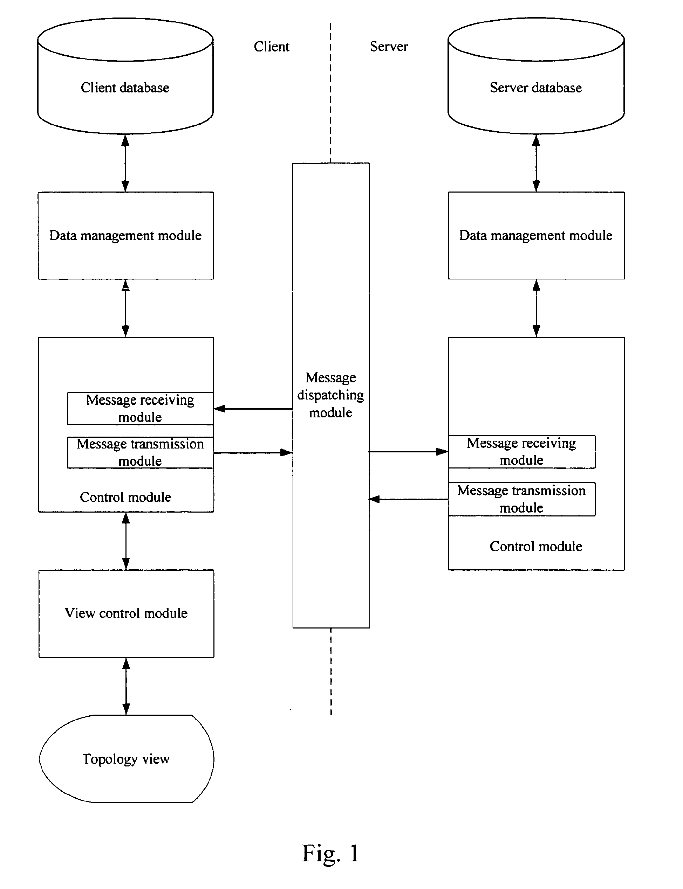

Figure 1 is a conventional system for synchronizing network management topology data. With reference to figure 1, a client includes a client database, a data management module, a control module, and a view control module. The control module in the client includes a message receiving module and a message transmission module. A server includes a server database, a data management module and a control module. The control module in the server includes a message receiving module and a message transmission module. A message dispatching module for dispatching messages may be included between the client and the server.

When the topology data needs to be synchronized according to the conventional technology, the client cleans up local data by the data management module and cleans up view vision by the view control module; the client acquires data from the server; the client reconfigures local data, and redraws the whole topology view by the view control module.

Message interaction between the client and the server in conventional technology enables update of data on the client when a change of data occurs on the server.

However, in synchronization of data on the client, only a small amount of data on the client is inconsistent with data on the server. It costs too much to synchronize all the data for a small amount of inconsistent data. The synchronization may also have performance disadvantages as follows:
1) Larger network interaction consumption, because a large amount of data is needed to be transmitted through the network;
2) Larger time consumption, because the client needs to re-parse and re-construct a large amount of data in response to receiving data;
3) Low efficiency, because the view control module needs to re-construct the whole topology view, which costs a lot of time; and
4) Serious data loss and function skipping, because the client cannot provide any service during the process of acquiring and parsing the data which cost too much time.

### Summary of the Invention

Embodiments of the present invention provide a method and system for synchronizing network management topology data, so as to reduce the amount of data transmitted during the network management topology data synchronization.

An embodiment of the present invention discloses a method applied to a client for synchronizing network management topology data.. The method includes: sending a first data identifier, ID, and a first status identifier associated with a first data on a client to a server; receiving a second data on the server from the server, where a second data ID associated with the second data is identical with the first data ID, and a second status identifier associated with the second data is different from the first status identifier; and updating the first data on the client according to the second data..

An embodiment of the present invention provides a method applied to a server for synchronizing network management topology data. The method includes: receiving from a client a first data identifier, ID, and a first status identifier associated with a first data on the client; determining that a second data ID associated with the second data is identical with the first data ID, and a second status identifier associated with the second data is different from the first status identifier; and sending the second data on the server to the client by which the first data is updated according to the second data.

An embodiment of the present invention provides a client for synchronizing network management topology data. The client includes: a client database, capable of saving a first data identified by a first data ID; a client control module, capable of sending the first data ID and a first status identifier associated with the first data in the client database to a server, and receiving a second data from the server; and a client data management module, capable of updating the first data according to the second data; where a second data ID associated with the second data is identical with the first data ID; and a second status identifier associated with the second data is different from the first status identifier..

An embodiment of the present invention provides a server for synchronizing network management topology data. The server includes: a server database, capable of saving a second data identified by a second data ID; a server data management module, capable of accessing or updating the second data in the server database; a server control module, capable of receiving a first data ID and a first status identifier associated with a first data on a client from a client, determining that the second data ID associated with the second data is identical with the first data ID and a second status identifier associated with the second data is different from the second status identifier; and sending the second data to the client by which the first data is updated according to the second data.

It can be seen from the above technical scheme that a status identifier for indicating attribute status of data on a client and data on a server is introduced respectively, therefore the client just needs to send a first data ID and a first status identifier associated with a first data on the client to the server and the server sends a second data on the server to the client by which the first data is updated according to the second data if a second data ID associated with the second data is identical with the first data ID, and a second status identifier associated with the second data is different from the first status identifier. In this way, the changed data is transmitted during data synchronization, therefore data interactions brought by data synchronization are greatly reduced; network resource and total time consumptions brought by data synchronization are reduced. Because the time consumption brought by data synchronization is reduced, the probability of service loss and function skipping during data synchronization is lowered.

### Brief description of the drawings

Figure 1 is a schematic diagram illustrating a structure of a conventional system.
Figure 2 is a schematic diagram illustrating a structure of data with a status identifier.
Figure 3 is a schematic diagram illustrating calculation and saving of checksums based on a correspondence table.
Figure 4 is a schematic diagram illustrating calculation and saving of checksums based on adding attributes in data.
Figure 5 is a flow chart illustrating the process for updating a checksum.
Figure 6 is a schematic diagram illustrating a structure of a system according to an embodiment of the present invention.
Figure 7 is a flow chart illustrating the process for generating a checksum during the initialization of the client and the server.
Figure 8 is a flow chart according to an embodiment of the present invention.
Figure 9 is a flow chart according to another embodiment of the present invention.

### Detailed description of the invention

In order to make the technical schemes and merits of the present invention more apparent, a detailed description of the present invention is hereinafter given with reference to the drawings and embodiments.

According to an embodiment of the present invention, data on a client and data on a server is compared; inconsistent data is synchronized while consistent data is not synchronized between the client and the server. Therefore, the amount of data to be synchronized is reduced. The client only re-constructs the topology views associated with the inconsistent data, which reduces the time for refreshing topology view and improves the efficiency of refreshing. For example, the client may be a topology foreground, and the server may be a topology backstage.

In an embodiment of the present invention, a status identifier is introduced for each data on both of the client and the server to indicate changes of attributes of the data.

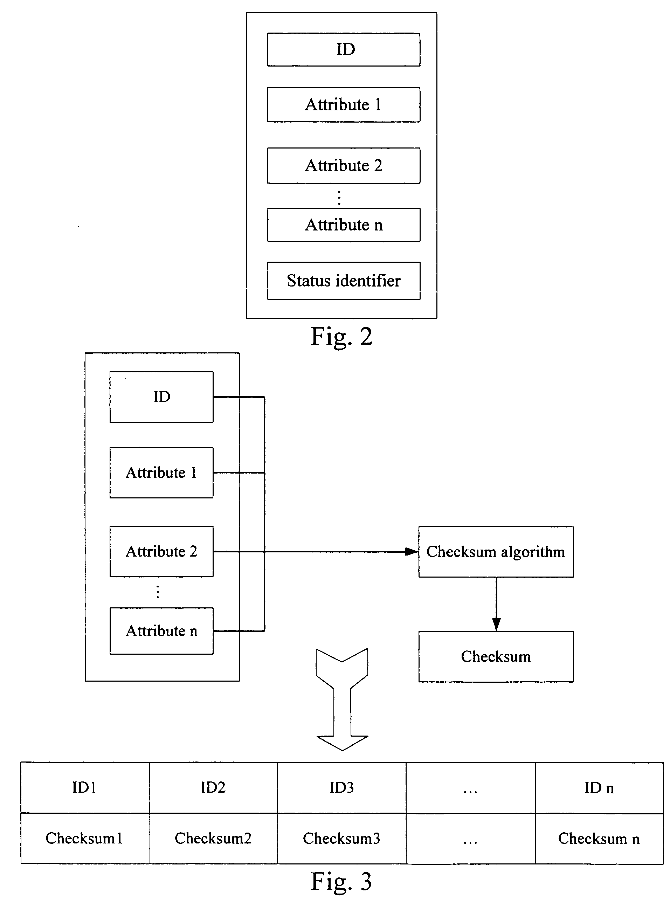

The status identifier may be taken as a portion of the data. As illustrated by way of example in figure 2, a status identifier is added into the data. The original data includes a data identifier (ID) and attribute 1, attribute 2, ...attribute n. The status identifier, as shown in figure 2, may be considered as a variable attribute of the data.

Alternatively, a plurality of status identifiers may be saved correspondingly with data IDs in a correspondence table. In other words, the corresponding relation between the data IDs and the status identifiers are saved in a database. For example, table 1 shows the corresponding relation between the data IDs and the status identifiers.

**Table 1**

| ID1 | ID2 | ID3 | ... | IDn |
|---|---|---|---|---|
| Status identifier 1 | Status identifier 2 | Status identifier 3 | ... | Status identifier n |

No matter how the status identifiers are saved, as a part of the data, or in the correspondence table, a status identifier can be saved as integer (int) values by way of example, to reduce consumption of the memory, time and complexity of calculation or comparison.

For example, if a status identifier on the client corresponding to a data ID is different from a status identifier on the server corresponding to the same data ID, the data identified by the data ID on the client is different from the data identified by the same data ID on the server, i.e. the data identified by the data ID on the client and the data identified by the same data ID on the server need to be synchronized. For example, if the status identifier on the client corresponding to the data ID and the status identifier on the server corresponding to the same data ID are the same, the data identified by the data ID on the client is same to the data identified by the same data ID on the server, i.e. the data identified by the data ID on the client and the data identified by the same data ID on the server need not to be synchronized.

For example, the status identifier may be a timestamp of the data. For another example, the status identifier may be a checksum calculated through certain algorithm. In an embodiment, if the status identifier is a timestamp, the update time of the data may be adopted as the timestamp to indicate the status of the data. In another embodiment, if the status identifier is a checksum, the checksum may be calculated according to the combination of the data identifier and attributes of the data through an algorithm, such as Cyclic Redundancy Check algorithm, Message Digest 5 algorithm. The checksum calculated is saved as the status identifier of the data. In the following description, the status identifier is the checksum by way of example.

In an embodiment, with reference to figure 3, the checksum of data is calculated according to a checksum algorithm, and saved correspondingly with the data ID. In other words, the corresponding relation between data IDs and checksums is saved.

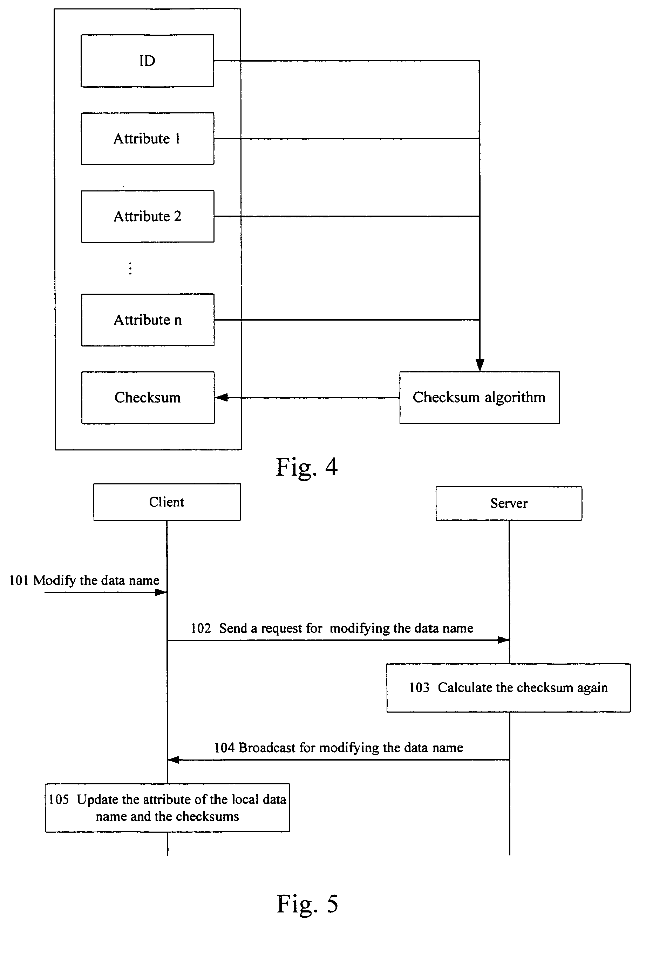

In an embodiment, as shown in figure 4, the checksum of data is calculated according to a checksum algorithm and saved as a portion of the data.

Attributes of the data include variable attributes and fixed attributes. The fixed attributes cannot be changed while the variable attributes may be changed during the synchronization. The fixed attributes need not to be refreshed during data synchronization. In an embodiment, the checksum of the data is calculated according to the checksum algorithm and the variable attributes. Therefore, the calculation complexity of the checksum is reduced.

It should be noted that the checksum algorithms on the client and the server should be identical. The checksum algorithms used on the client and the server should ensure that the checksums calculated by the client and the server are identical. In view of large data amount environment and complex service, the calculation efficiency is supposed to be high to enable as many operations as possible per time, so that redundant efficiency consumption would not be brought out by the calculation of the checksums while the data changes continually. In an embodiment, the CRC32 algorithm is adopted preferably. Millions operations can be performed in two seconds by the algorithm which can fully satisfy service requirement. Because the checksums are calculated according to variable attributes, and compared by the corresponding relation between the data identifiers and the checksums, the reliability of the CRC32 algorithm is ensured.

In an embodiment of the present invention, if a variable attribute of topology data changes, the checksum corresponding to the topology data should be calculated and updated correspondingly to ensure that the checksum of the data on the client is consistent with the checksum of the data on the server.

For example, the attribute of data such as a data name is changed. With reference to figure 5, the process for the client and the server updating a checksum is as follows.

In 101, a network management user modifies the data name on the client.

In 102, the client sends a request for modifying the data name to the server; the request includes the modified data name.

In 103, in response to receiving the request, the server modifies local data name, and calculates the checksum according to the modified data name.

In 104, the server sends a broadcast for modifying the data name; the broadcast includes a data ID and the modified data name.

In 105, in response to receiving the broadcast, each client modifies local data name, and calculates the checksum according to the modified data name.

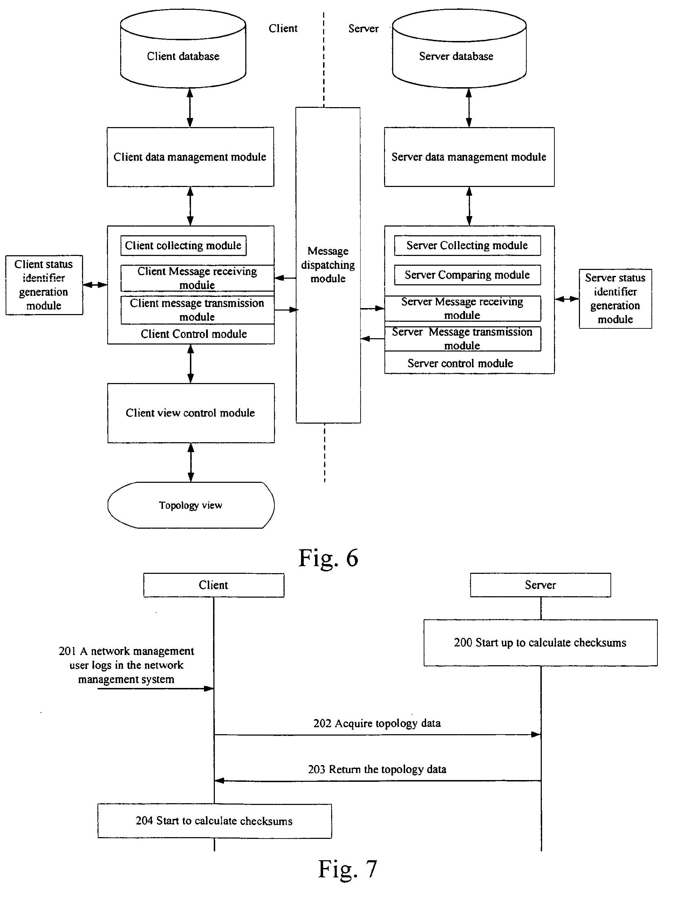

The system for synchronizing according to an embodiment of the present is shown in figure 6.

With reference to figure 6, the system includes a client and a server. The system may further include a message dispatching module for dispatching messages between the client and the server. Because most networks provide function of dispatching messages, the message dispatching module may not be necessary to be included. The messages according to an embodiment of the present invention may include data on the client, data on the server, data IDs, status identifiers, etc.

The client includes a client database, a client data management module, a client control module and a client status identifier generation module. The client may further include a client view control module.

The client database is used to save data on the client, and further used to save a status identifier associated with the data if necessary. The client data management module is used to manage the data in the client database, including the operations of accessing, adding, modifying, deleting, etc.

The client control module is used to send the a data ID and a status identifier associated with the data in the client database to the server, receive data on the server from the server, and update the data in the client database via the client data management module. The client control module may include a client message receiving module for receiving a message, and a client message transmission module for transmitting a message. The client control module may also include a client collecting module for collecting data in the client database according to requirement, or collecting data and corresponding status identifiers in the client database.

The client status identifier generation module is used to generate a status identifier associated with the data in the client database. For example, the client status identifier generation module is used to calculate checksums associated with the data using a checksum algorithm, and save the checksums in the client database or provide the checksums for the client message transmission module.

The client view control module, besides constructing topology views according to the data during the initialization as the prior art, is used to re-construct a topology view associated with data to be updated received from the server during data refreshing.

With reference to figure 6, the server includes a server database, a server data management module, a server control module, and a server status identifier generation module.

The server database is used to save data on the server, and may further used to save a status identifier associated with the data if necessary.

The server data management module is used to manage the data in the server database, such as accessing, adding, modifying and deleting.

The server control module is used to compare a status identifier from the client corresponding to a data ID with a status identifier on the server corresponding to the same data ID, in response to receiving the data ID and the status identifier associated with the data on the client; return data on the server identified by the data ID to the client, if the status identifier from the client corresponding to the data ID is different from the status identifier on the server corresponding to the same data ID.

The server control module may include a server comparing module, a server collecting module, a server message receiving module and a server message transmission module.

The server message receiving module and the server message transmission module are used to receive and transmit a message respectively.

The server comparing module in the server control module is used to compare the status identifier from the client corresponding to the data ID with the status identifier on the server corresponding to the same data ID; in which, the data ID and the status identifier from the client corresponding to the data ID is obtained by the server message receiving module; the status identifier on the server corresponding to the same data ID is obtained by the server collecting module or the server status identifier generation module; and send the data ID to the server collecting module if the status identifier from the client is different from the status identifier on the server so that the server collecting module can collect the data identified by the data ID from the server database.

The server collecting module in the server control module is used to collect data from the server database if necessary, or collect the data and the status identifier associated with the data from the server database.

The server status identifier generation module, which has similar function with the client status identifier generation module, is used to generate the status identifier associated with the data in the server data base, and save the status identifier in the server database or provide the status identifier for the server comparing module.

The process for topology data synchronizing is as follows.

In an embodiment, the client and the server each generates a status identifier of the data in advance. The following is when the status identifier is a checksum.

To ensure that the mechanism of the checksum operates normally, the client and the server each needs to initialize the checksum of each data when starting up, and saves the corresponding relation between the data and the checksums according to data IDs. With reference to figure 7, the process for initializing the checksum of each part of data when starting up by the client and the server is as follows.

In 200, the server starts up, the server status identifier generation module calculates the checksum for each data using a checksum algorithm, and saves the checksum corresponding to each data in the server database.

In 201, the client starts up, the network management user logs in the network management system.

It should be noted that the sequence of 200 and 201 is not limited. In other words, 200 and 201 may be implemented in different sequence or implemented simultaneously.

In 202, the client initiates a request for topology data from the server.

In 203, the server returns the topology data to the client.

In 204, the client status identifier generation module calculates the checksum of each data using a checksum algorithm, and saves the data and corresponding checksum in the client database.

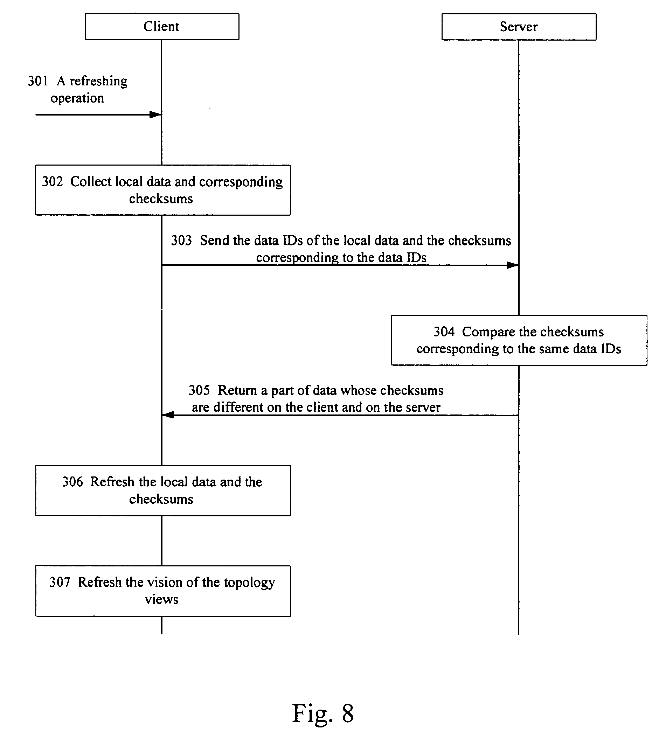

Based on the above initialization, with reference to figure 8 by way of example, the process of the topology data synchronization is as follows.

In 301, a refreshing operation is performed on the client by a network management user.

In 302, the client collecting module in the client control module collects data identified by a data ID and a checksum associated with the data in the client database via the client data management module.

In 303, the client message transmission module in the client control module sends the data ID and the checksum associated with the data in the client database to the server.

For example, the structure of the message sent by the client to the server may be as follows.

```
     ObjectPairId
     {
          StrObjectID       STRING
          iChecksum         INTEGER
     }
```

Where, the "strOjectID" is the data ID. The type of the "strOjectID" is a character string. The "iChecksum" is the checksum corresponding to the data ID. The type of the "iChecksum" is int. The merit of the structure is that the data amount is small because not all of the data attributes need to be contained; therefore, the consumption brought by the network interaction is low.

In 304, the server message receiving module in the server control module receives the data ID and the checksum associated with the data on the client from the client via the message dispatching module. The server message receiving module in the server control module sends the data ID and the checksum associated with the data on the client to the server comparing module in the server control module. The server comparing module in the server control module compares the checksum from the client corresponding to the data ID with a checksum on the server corresponding to the same data ID. For each data ID, if the checksum from the client corresponding to the data ID is identical with the checksum on the server corresponding to the same data ID, updating is not needed, otherwise, updating is needed.

In 305, the server message transmission module sends the data identified by the data ID to the client if the checksum on the client corresponding to the data ID is different from the checksum on the server corresponding to the same data ID. The data may be dispatched to the client via the message dispatching module.

In 306, the client message receiving module in the client control module receives the data from the server, the client data management module updates the data in the client database. The data in the client database may be modified, added or deleted.

Further, the client control module calls the client status identifier generation module to calculate the checksum according to the data received from the server, and the checksum is updated and saved in the client database by the client data management module.

In 307, the client control module may further calls the client view control module to re-construct the topology views corresponding to the data according to the data received from the server, so that the topology views of the client may be refreshed.

In another embodiment of the present invention, the checksum may not be calculated and saved during the initialization, but calculated during the synchronization process.

Although the calculation complexity of synchronizing the data is increased by calculating the checksum during the synchronization process, the integrality of the topology data structure could be ensured, and the calculation of the checksum is relatively centralized which has little influence over the system structure.

The checksum calculated may be saved or not. The following description is an example showing that the checksum calculated is not saved.

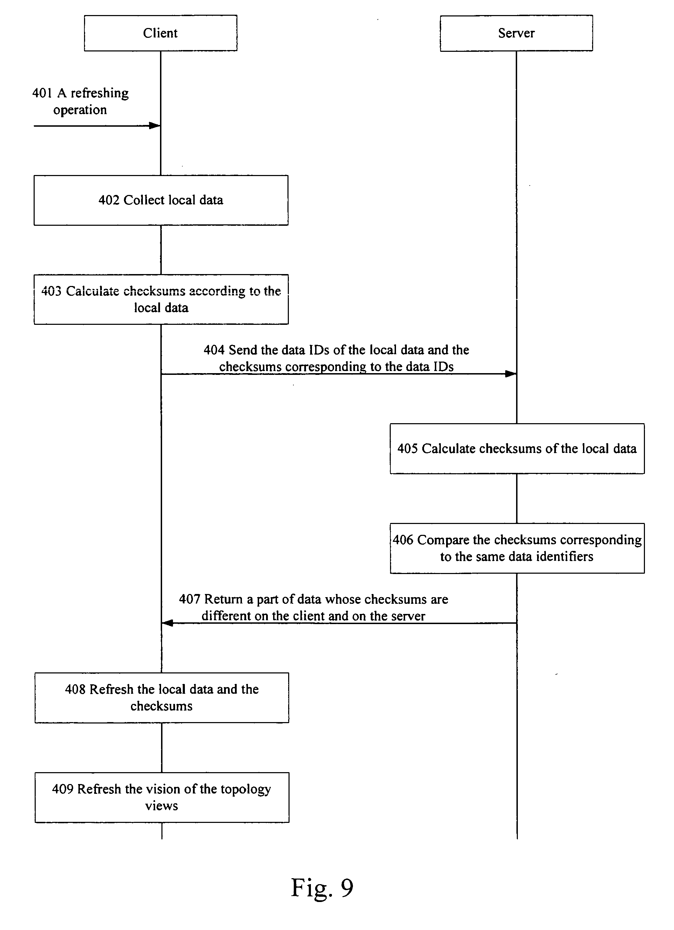

With reference to figure 9, the process for the topology data synchronizing according to the embodiment is as follows.

In 401, a refreshing operation is performed on the client by a network management user.

In 402, the client collecting module in the client control module collects data identified by a data ID from the client database via the client data management module.

In 403, the client control module calls the client status identifier generation module to calculate the checksum according to the data collected.

In 404, the client message transmission module sends the data ID associated with the data collected and checksum corresponding to the data ID to the server.

In 405, the server message receiving module in the server control module receives the data ID and the checksum associated with the data in the client database from the client via the message dispatching module. The server status identifier generation module calculates a checksum of the local data, and sends the checksum of the local data to the server comparing module in the server control module.

In 406, the server comparing module in the server control module compares the checksum from the client corresponding to the data ID with the checksum on the server corresponding to the same data ID.

For each data ID, if the checksum from the client corresponding to the data ID is identical with the checksum on the server corresponding to the same data ID, updating is not needed: otherwise, updating is needed.

In 407, the server message transmission module sends the data identified by the data ID to the client, if the checksum from the client corresponding to the data ID is different from the checksum on the server corresponding to the same data ID. The data may be dispatched to the client via the message dispatching module.

In 408, the client message receiving module in the client control module receives the data from the server; the client data management module updates the data in the client database, which includes the operations of modifying, adding or deleting.

In 409, the client control module may further call the client view control module to re-construct a topology view associated with the data according to the data received from the server; so that the client topology views may be refreshed.

It should be noted that the above descriptions are merely embodiments of the present invention. Those skilled in the art should recognize any modification of the embodiment. For example, in an embodiment, the client may initialize checksums of all data on the client; the server may calculate checksum of data on the server during synchronizing process. In another embodiment, the server may initialize checksums of all data on the server; the client may calculate checksum of data on the client during synchronizing process.

It should be appreciated that the method according to the embodiments of the present invention can be executed by software. The software may be stored in a computer readable storage medium.

According to an embodiment, when the program of the software is executed on a client, the client can implement processes as follows:

The client sends a first data ID and a first status identifier associated with a first data on a client to a server;

The client receives a second data on the server from the server, in which a second data ID associated with the second data is identical with the first data ID; a second status identifier associated with the second data is different from the first status identifier; and

The client updates the first data according to the second data.

According to an embodiment, when the program of the software is executed on a server, the server can implement processes as follows.

The server receives from a client a first data identifier, ID, and a first status identifier associated with a first data on the client; and

The server determines that a second data ID associated with the second data is identical with the first data ID; a second status identifier associated with the second data is different from the first status identifier; and sends the second data to the client by which the first data is updated according to the second data.

The computer readable storage medium includes ROM/RAM, disc, and CD-ROM etc.

The foregoing description is only preferred embodiments of the present invention and is not for use in limiting the protection scope thereof. All the modifications, equivalent replacements or improvements in the scope of the present invention's sprit and principles shall be included in the protection scope of the present invention.

## Claims

1. A method for synchronizing network management topology data, applied to a client, comprising:
sending a first data identifier, ID, and a first status identifier associated with a first data on a client to a server;
receiving a second data on the server from the server, wherein a second data ID associated with the second data is identical with the first data ID; and a second status identifier associated with the second data is different from the first status identifier; and
updating the first data on the client according to the second data.

2. The method of claim 1, further comprising:
updating the first status identifier according to the second data.

3. The method of claim 1, further comprising:
re-constructing a topology view associated with the second data according to the second data.

4. A method for synchronizing network management topology data, applied to a server, comprising:
receiving from a client a first data identifier, ID, and a first status identifier associated with a first data on the client;
determining that a second data ID associated with the second data is identical with the first data ID, and a second status identifier associated with a second data on the server is different from the first status identifier; and
sending the second data on the server to the client by which the first data is updated according to the second data.

5. The method of any one of claims 1-4, wherein the first status identifier is generated according to the first data during initializing procedure and saved by the client.

6. The method of any one of claims 1-4, wherein the first status identifier is generated according to the first data in response to performing a refreshing operation.

7. The method of any one of claims 1-6, wherein the second status identifier is generated according to the second data during initializing procedure and saved by the server.

8. The method of any one of claims 1-6, wherein the second status identifier is generated according to the second data in response to receiving the first data ID and the first status identifier.

9. The method of any one of claims 1-8, wherein the first status identifier is a checksum calculated according to all attributes of the first data;
the second status identifier is a checksum calculated according to all attributes of the second data.

10. The method of any one of claims 1-8, wherein the first status identifier is a checksum calculated according to variable attributes of the first data; the second status identifier is a checksum calculated according to variable attributes of the second data.

11. The method of any one of claims 1-8, wherein the first status identifier is a timestamp representing the time of updating the first data; the second status identifier is a timestamp representing the time of updating the second data.

12. A client for synchronizing network management topology data, comprising:
a client database, capable of saving a first data identified by a first data identifier, ID;
a client control module, capable of sending the first data ID, and a first status identifier associated with the first data to a server, and receiving a second data from the server; and
a client data management module, capable of updating the first data according to the second data;
wherein a second data ID associated with the second data is identical with the first data ID, and a second status identifier associated with the second data is different from the first status identifier.

13. The client of claim 12, further comprising:
a client status identifier generation module, capable of generating a first status identifier associated with the first data in the client database, and saving the first status identifier in the client database.

14. The client of claim 13, wherein the client control module comprises:
a client collecting module, capable of collecting the first data identified by the first data ID and the first status identifier associated with the first data from the client database via the client data management module; and
a client message transmission module, capable of sending the first data ID and the first status identifier associated with the first data to the server;
a client message receiving module, capable of receiving the second data from the server.

15. The client of claim 12, wherein the client control module comprises:
a client collecting module, capable of collecting the first data identified by the first data ID from the client database via the client data management module;
the client further comprising:
a client status identifier generation module, capable of generating the first status identifier associated with the first data collected by the client collecting module,; and the client control module further comprises:
a client message transmission module, capable of sending the first data ID and the first status identifier generated by the client status identifier generation module to the server;
a client message receiving module, capable of receiving the second data from the server.

16. The client of any one of claims 12-15, further comprising:
a client view control module, capable of re-constructing a topology view associated with the second data received from the server according to the second data.

17. A server for synchronizing network management topology data, comprising:
a server database, capable of saving a second data identified by a second data ID;
a server data management module, capable of accessing or updating the second data in the server database;
a server control module, capable of receiving a first data ID and a first status identifier associated with a first data from a client, determining that the second data ID associated with the second data is identical with the first data ID and a second status identifier associated with the second data is different from the second status identifier; and sending the second data to the client by which the first data is updated according to the second data.

18. The server of claim 17, further comprising:
a server status identifier generation module, capable of generating the second status identifier associated with the second data in the server database, and saving the second status identifier in the server database.

19. The server of claim 18, wherein the server control module comprises:
a server message receiving module, capable of receiving the first data ID and the first status identifier associated with the first data from the client;
a server collecting module, capable of collecting the second data identified by the second data ID and the second status identifier associated with the second data from the server database via the server data management module;
a comparing module, capable of determining that the first data ID is identical with the second data ID, and the first status identifier is different from the second status identifier; and
a server message transmission module, capable of sending the second data to the client by which the first data is updated according to the second data, if the first data ID is identical with the second data ID, and the first status identifier is different from the second status identifiers.

20. The server of claim 17, wherein the server control module comprises:
a server message receiving module, capable of receiving the first data ID and the first status identifier associated with the first data from the client;
a server collecting module, capable of collecting the second data identified by the second data ID from the server database via the server data management module; and
the server further comprising:
a server status identifier generation module, capable of generating the second status identifier associated with the second data collected by the server collecting module.
the server control module further comprises:
a server comparing module, capable of determining that the first data ID received by the server message receiving module is identical with the second data ID, and the first status identifier received by the server message receiving module is different from the second status identifiers generated by the server status identifier generation module; and
a server message transmission module, capable of sending the second data to the client, if the first data ID is identical with the second data ID, and the first status identifier is different from the second status identifiers.

21. A readable storage medium, comprising computer program code means to make a client execute the processes according to claim 1.

22. A readable storage medium, comprising computer program code means to make a server execute the processes according to claim 4.
